# FASCICULE DE BREVET EUROPEEN

(11) **EP 4 069 962 B1**
(45) Date de publication et mention de la délivrance du brevet: **07.02.2024**
(21) Numéro de dépôt: 20815854.3
(22) Date de dépôt: 03.12.2020
(51) Int. Cl.: F02M 35/104, F02M 35/112

(54) **REPARTITEUR D'ADMISSION D'AIR POUR UN MOTEUR A COMBUSTION**
LUFTANSAUGVERTEILER FÜR EINEN VERBRENNUNGSMOTOR
AIR INTAKE DISTRIBUTOR FOR A COMBUSTION ENGINE

(30) Priorité: 05.12.2019 FR 1913819
(43) Date de publication de la demande: 12.10.2022
(73) Titulaire: Renault s.a.s, 92100 Boulogne Billancourt (FR)
(72) Inventeur: BOUBENNEC, Romain, 75003 PARIS (FR); CLAUSTRE, Daniel, 77330 Ozoir la Ferriere (FR); GOARDOU, Yohann, 78280 GUYANCOURT (FR)
(86) Numéro de dépôt international: PCT/EP2020/084348
(87) Numéro de publication internationale: WO 2021/110786

(56) Documents cités:
- KR-A- 20140 142 100
- US-A1- 2016 169 171

## Description

### Domaine technique de l'invention

La présente invention concerne le domaine des répartiteurs d'admission d'air de moteurs à combustion.

L'invention concerne plus particulièrement un répartiteur d'admission d'air, notamment pour véhicule automobile, présentant une forme parallélépipédique et une entrée d'admission d'air latérale.

### Arrière-plan technique

Un répartiteur d'admission d'air d'un moteur à combustion a pour fonction de répartir un flux d'admission d'air sur l'ensemble des cylindres du moteur.

La géométrie du répartiteur d'admission d'air a un impact important sur la performance du moteur.

D'une part, la géométrie du répartiteur d'admission d'air conditionne le rendement de combustion de chaque cylindre. Ce rendement de combustion est amélioré notamment lorsque le flux d'admission dans le cylindre se rapproche d'une valeur nominale pour le cylindre. Toute amélioration de la combustion participe directement à la réduction des émissions polluantes du moteur, en particulier de dioxyde de carbone (CO₂) et à la réduction de la consommation en carburant.

D'autre part, la géométrie du répartiteur d'admission d'air conditionne la répartition du flux d'admission entre les différents cylindres du moteur. Une répartition non homogène du flux d'admission entre les différents cylindres dégrade le fonctionnement du moteur et en particulier perturbe le contrôle de la puissance du moteur qui ne résulte plus à part égale des différents cylindres du moteur.

Cependant, les caractéristiques géométriques du répartiteur d'admission d'air sont également dictées par d'autres impératifs que la seule optimisation de la répartition du flux d'admission. En particulier, la géométrie du répartiteur d'admission d'air est contrainte par l'implantation du répartiteur d'admission d'air dans l'environnement moteur.

Les répartiteurs d'admission d'air présentant une forme parallélépipédique sont connus en soi. La forme parallélépipédique permet d'obtenir un répartiteur d'admission d'air présentant un volume intérieur suffisamment grand pour favoriser la réflexion d'ondes acoustiques provenant des cylindres du moteur tout en limitant son encombrement. La réflexion des ondes acoustiques permet d'améliorer l'admission d'air.

Les répartiteurs d'admission d'air présentant une entrée d'admission d'air latérale sont également connus en soi et permettent de répondre à certaines contraintes d'architecture et d'encombrement.

De tels répartiteurs sont par exemple connus des documents KR 20140142100A et US 2016169171A1.

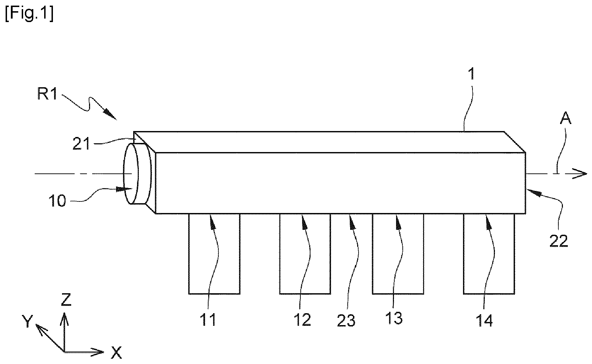

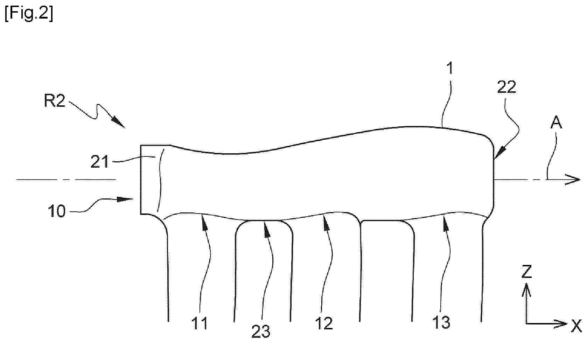

Deux exemples de répartiteurs d'admission d'air R1 et R2 de l'art antérieur présentant une forme parallélépipédique et une entrée d'admission d'air latérale sont donnés aux figures 1 et 2 respectivement. Ces répartiteurs d'admission d'air comportent :
- un plenum (1) de forme parallélépipédique rectangle dont la longueur s'étend selon un axe A entre une paroi transversale amont (21) ouverte et une paroi transversale aval (22) fermée et qui présente une section transversale rectangulaire le long de l'axe A,
- un orifice d'entrée (10) de flux formé dans la paroi transversale amont (21) qui est arrondi et qui est apte à être relié à un conduit d'entrée d'un flux d'admission dans le plenum (1),
- au moins trois orifices de sortie (11-14) d'un flux d'admission dont chacun est apte à être relié à un cylindre du moteur, et dont chacun est agencé dans une même paroi latérale inférieure (23).

Le répartiteur d'admission d'air R2 de la figure 2 diffère du répartiteur d'admission d'air R1 de la figure 1 en ce qu'il comporte trois orifices de sortie au lieu de quatre et une section transversale décroissante puis croissante de l'amont vers l'aval du plenum pour favoriser le passage du flux d'admission dans les deux orifices de sortie situés les plus en amont.

La géométrie d'un répartiteur d'admission d'air présentant une forme parallélépipédique et une entrée d'admission d'air latérale pénalise l'homogénéité de la répartition du flux d'admission entre les différents cylindres du moteur. Ceci est dû principalement à deux facteurs. Le premier facteur est l'éloignement croissant des orifices de sortie successifs par rapport à l'orifice d'entrée. Le deuxième facteur est la perturbation du flux à l'entrée dans le plenum en raison d'une discontinuité de forme.

L'invention propose une solution visant à pallier les inconvénients précités. Un objectif de l'invention est de proposer un répartiteur d'admission d'air présentant une forme parallélépipédique et une entrée d'admission d'air latérale permettant une meilleure homogénéité de la répartition du flux d'admission entre les différents cylindres du moteur par rapport à l'état de l'art.

### Résumé de l'invention

L'invention propose un répartiteur d'admission d'air pour un moteur à combustion, notamment pour véhicule automobile, selon la revendication 1, et comportant :
- un plenum de forme parallélépipédique rectangle dont la longueur s'étend selon un axe A entre une paroi transversale amont ouverte et une paroi transversale aval fermée et qui présente une section transversale rectangulaire le long de l'axe A,
- un orifice d'entrée de flux formé dans la paroi transversale amont qui est arrondi et qui est apte à être relié à un conduit d'entrée d'un flux d'admission dans le plenum,
- au moins trois orifices de sortie d'un flux d'admission dont chacun est apte à être relié à un cylindre du moteur, et dont chacun est agencé dans une même paroi latérale inférieure du plenum,
le plenum comportant une paroi latérale supérieure opposée à ladite paroi latérale inférieure comportant une portion incurvée convexe formée en saillie le long d'au moins un tronçon axial du plenum, à proximité de la paroi transversale amont, la portion incurvée convexe présentant une section transversale en arc de cercle dont le rayon est inférieur à la moitié de la largeur minimale du tronçon axial du plénum.

Selon d'autres caractéristiques de l'invention :
- la portion incurvée est dans le prolongement d'une partie supérieure d'un bord de l'orifice d'entrée,
- le rayon de la section transversale en arc de cercle de la portion incurvée est constant tout le long dudit tronçon,
- le centre de la section en forme d'arc de cercle de la portion incurvée est excentré par rapport au centre de l'orifice d'entrée,
- l'orifice d'entrée est centré par rapport à la paroi transversale amont,
- le plenum présente une section décroissante sur une première portion dudit tronçon adjacente à la paroi transversale amont,
- le plenum présente une section croissante sur une deuxième portion dudit tronçon adjacente à la première portion,
- le tronçon s'étend en regard des deux orifices de sortie les plus en amont du plenum.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective d'un premier répartiteur d'admission d'air de l'art antérieur présentant une forme parallélépipédique et une entrée d'admission d'air latérale ;
[Fig.2] - la figure 2 est une vue de côté d'un deuxième répartiteur d'admission d'air de l'art antérieur présentant une forme parallélépipédique et une entrée d'admission d'air latérale ;
[Fig.3] - la figure 3 est une vue en perspective d'un répartiteur d'admission d'air selon un premier mode de réalisation de l'invention ;
[Fig.4] - la figure 4 est une vue de côté du répartiteur d'admission d'air de la figure 3 ;
[Fig.5] - la figure 5 est une vue de dessus du répartiteur d'admission d'air de la figure 3 ;
[Fig.6] - la figure 6 est une vue en perspective d'une partie du répartiteur d'admission d'air de la figure 3 issue d'une coupe transversale ;
[Fig.7] - la figure 7 est une représentation graphique qui représente la perméabilité de chacun des orifices de sortie pour le répartiteur d'admission d'air selon l'art antérieur de la figure 2 et pour le répartiteur d'admission d'air selon l'invention de la figure 3 ;
[Fig.8] - la figure 8 est une vue en perspective d'un répartiteur d'admission d'air selon un deuxième mode de réalisation de l'invention ;
[Fig.9] - la figure 9 est une vue de face du répartiteur d'admission d'air de la figure 8.

### Description détaillée de l'invention

Pour la description de l'invention et la compréhension des revendications, on adoptera à titre non limitatif et sans référence limitative à la gravité terrestre les orientations longitudinale, transversale et verticale, selon le repère X, Y, Z indiqué aux figures dont les axes longitudinal X et transversal Y s'étendent dans un plan horizontal.

Par convention, l'axe longitudinal X est orienté de l'arrière vers l'avant, l'axe transversal Y est orienté de la droite vers la gauche et l'axe vertical Z est orienté du bas vers le haut.

Par convention, le terme « interne » désigne un élément situé à l'intérieur du plenum du répartiteur par opposition au terme « externe ».

Par convention, le flux d'admission circule d'amont en aval à travers le plenum.

Dans la description qui va suivre, des éléments identiques, similaires ou analogues seront désignés par les mêmes chiffres de référence.

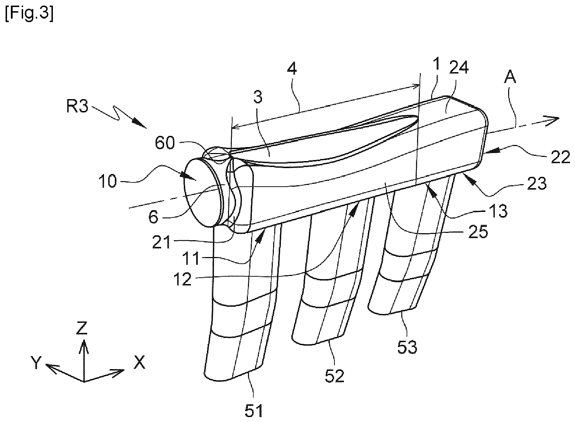

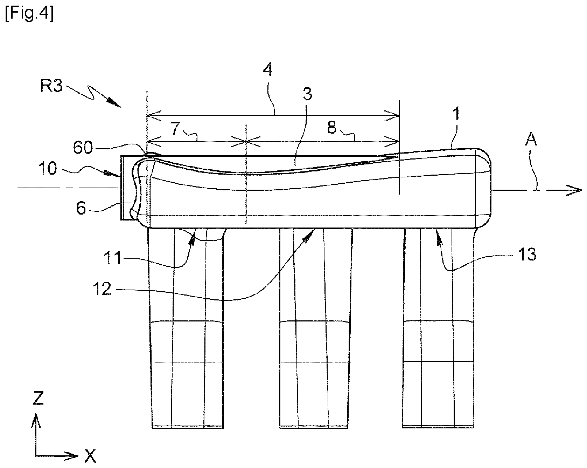

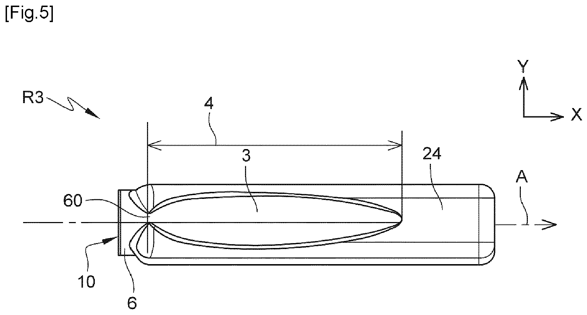

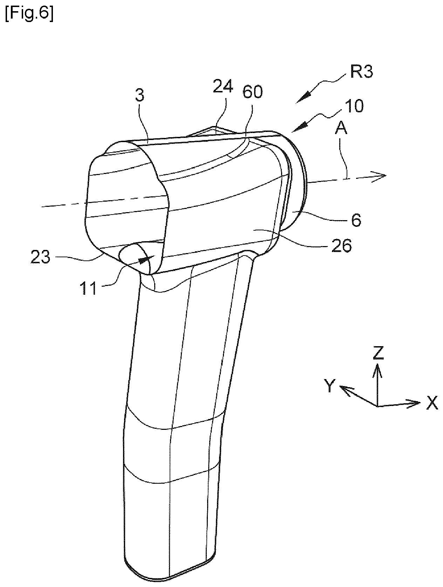

Aux figures 3 à 7, un exemple de répartiteur d'admission d'air R3 selon l'invention est donné dans le cadre de l'amélioration des performances du répartiteur d'admission d'air R2 de la figure 2 de l'art antérieur.

Le répartiteur d'admission d'air R3 est destiné à répartir un flux d'admission sur l'ensemble des cylindres d'un moteur à combustion à trois cylindres d'un véhicule automobile.

Le répartiteur d'admission d'air R3 comporte un plenum 1, un orifice d'entrée 10 et trois orifices de sortie 11, 12 et 13.

Le plenum 1 présente une forme générale parallélépipédique rectangle. Le plenum 1 s'étend en longueur selon un axe A, parallèle à l'axe longitudinal X. Le plenum 1 présente une section transversale rectangulaire le long de l'axe A. Dans l'exemple, la section transversale rectangulaire présente une dimension verticale selon l'axe Z inférieure à sa dimension transversale selon l'axe Y.

Le plenum 1 présente un volume interne déterminé pour favoriser la réflexion d'ondes acoustiques provenant des cylindres du moteur.

Le volume interne du plenum 1 est délimité longitudinalement par une paroi transversale amont 21 et une paroi transversale aval 22. Le volume interne du plenum 1 est délimité verticalement par une paroi latérale inférieure 23 et une paroi latérale supérieure 24. Le volume interne du plenum 1 est délimité transversalement par une paroi latérale à droite 25 et une paroi latérale à gauche 26.

La paroi transversale amont 21 est ouverte. La paroi transversale aval 22 est fermée.

L'orifice d'entrée 10 est formé dans la paroi transversale amont 21. L'orifice d'entrée 10 est arrondi et plus précisément circulaire. L'orifice d'entrée 10 est agencé pour être relié à un conduit d'entrée (non représenté) d'un flux d'admission dans le plenum 1.

Le flux d'admission provient :
- soit directement de l'air « frais » de l'atmosphère à l'extérieur du véhicule admis dans le conduit d'entrée après simple filtrage, c'est alors de l'air,
- soit d'un mélange d'air « frais » et d'une partie des gaz d'échappement mise en recirculation selon un procédé connu sous l'acronyme « EGR » pour « Exhaust Gas Recirculation » en terminologie anglaise.

Ainsi, dans la présente description, le terme « air » ne doit pas être interprété limitativement et ce terme désigne indifféremment de l'air « frais » ou un mélange d'air « frais » et de gaz d'échappement.

Chaque orifice de sortie 11, 12, 13 est apte à être relié à un cylindre du moteur par des conduits 51, 52, 53. Chacun des orifices de sortie 11, 12, 13 est agencé dans la paroi latérale inférieure 23 du plenum 1. Les orifices de sortie 11, 12 et 13 sont alignés selon une direction longitudinale. Ils sont espacés régulièrement le long de la paroi latérale inférieure 23 du plenum 1. En fonctionnement, le flux d'admission pénètre dans le volume interne du plenum par l'orifice d'entrée 10. Le flux d'admission d'air se partage en trois flux à l'intérieur du volume du plenum pour ressortir par chacun des trois orifices de sortie 11, 12, 13 et ainsi alimenter chacun des trois cylindres du moteur.

Selon l'invention, la paroi latérale supérieure 24 du plenum 1 comporte une portion incurvée 3 convexe. La portion incurvée 3 est formée en saillie le long d'un tronçon 4 axial du plenum 1.

Toujours selon l'invention, la portion incurvée 3 présente une section transversale en arc de cercle.

La section transversale en arc de cercle de la portion incurvée présente un rayon R constant tout le long du tronçon 4. A titre illustratif et nullement limitatif, le rayon R de la section transversale en arc de cercle est égal au rayon de l'orifice d'entrée 10.

Toujours à titre illustratif, la section en forme d'arc de cercle de la portion incurvée 3 est centrée par rapport à l'orifice d'entrée 10. La section en forme d'arc de cercle de la portion incurvée 3 et l'orifice d'entrée 10 ont leur centre respectif sur l'axe A.

Selon l'invention, le tronçon 4 est à proximité de la paroi transversale amont 21. Dans l'exemple du répartiteur d'admission d'air R3, le tronçon 4 est plus particulièrement adjacent à la paroi transversale amont 21.

Conformément au répartiteur d'admission d'air R2, le répartiteur d'admission d'air R3 présente une section transversale décroissante puis croissante de l'amont vers l'aval du plenum pour favoriser le passage du flux d'admission dans les deux orifices de sortie 11 et 12 situés les plus en amont.

Le tronçon 4 est délimité longitudinalement par l'intersection d'un cylindre de rayon R et de la paroi latérale supérieure 24.

Le plenum 1 présente une section décroissante sur une première portion 7 du tronçon 4. La première portion 7 est adjacente à la paroi transversale amont 21.

Le plenum 1 présente une section croissante sur une deuxième portion 8 du tronçon 4. La deuxième portion 8 est adjacente à la première portion 7.

Le tronçon s'étend en regard des deux orifices 11, 12 de sortie les plus en amont du plenum 1.

L'orifice d'entrée 10 est délimité par un bord 6 faisant saillie de la paroi transversale amont 21. Le bord 6 de l'orifice d'entrée 10 comporte une partie supérieure 60 affleurant à la paroi latérale supérieure 24 au niveau de l'arête entre la paroi transversale amont 21 et la paroi latérale supérieure 24. La portion incurvée est dans le prolongement de la partie supérieure 60 du bord 6 de l'orifice d'entrée 10.

La portion incurvée 3 réalise une transition de forme progressive entre l'orifice d'entrée 10 et la paroi latérale supérieure 24. La transition de forme progressive limite la perturbation du flux à l'entrée dans le plenum introduite par une discontinuité de forme entre l'orifice circulaire 10 et la section transversale rectangulaire du plenum 1. En limitant la perturbation du flux à l'entrée dans le plenum, la transition de forme progressive améliore l'homogénéité de la répartition du flux d'admission entre les différents cylindres du moteur.

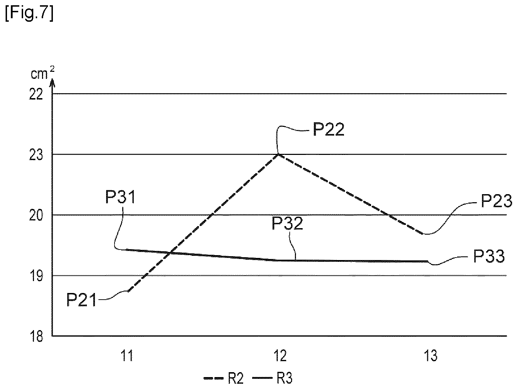

La figure 7 illustre l'amélioration de l'homogénéité de la répartition du flux d'admission entre les différents cylindres du moteur obtenue grâce à la mise en oeuvre de l'invention par rapport à l'état de l'art. Cette amélioration est illustrée par comparaison des perméabilités des orifices de sortie des répartiteurs d'admission d'air R2 et R3.

La perméabilité est une indication du flux d'admission effectivement délivré au cylindre.

La courbe pointillée relie les perméabilités P21, P22 et P23 des orifices de sortie 11, 12 et 13 du répartiteur d'admission d'air R2. Ces perméabilités P21, P22 et P23 sont de 18,74 cm², 21,01 cm² et de 19,65 cm². La perméabilité moyenne est de 19,80 cm². La dispersion entre les perméabilités P21, P22 et P23 est importante (11,5%) comme le montre les pentes des différents segments de la courbe pointillée.

La courbe pleine relie les perméabilités P31, P32 et P33 des orifices de sortie 11, 12 et 13 du répartiteur d'admission d'air R3. Ces perméabilités P31, P32 et P33 sont de 19,43 cm², 19,25 cm² et de 19,23 cm². La perméabilité moyenne est de 19,31 cm². La dispersion entre les perméabilités P31, P32 et P33 est faible (1,1%) comme l'allure pratiquement constante de la courbe pleine.

Ainsi, pour une perméabilité moyenne pratiquement équivalente (19,31 cm² au lieu de 19,80 cm²), le répartiteur d'admission d'air R3 selon l'invention permet d'obtenir une homogénéité de la répartition du flux d'admission entre les différents cylindres du moteur bien meilleure (dispersion de 1,1% au lieu de 11,5%) que le répartiteur d'admission d'air R2 de l'art antérieur.

Il est entendu que l'invention peut également être appliquée à un répartiteur d'admission d'air ayant plus de trois orifices de sortie. L'invention peut également être appliquée à un répartiteur d'admission d'air dont le plenum présente une section transversale constante. Ceci va être illustré dans ce qui suit.

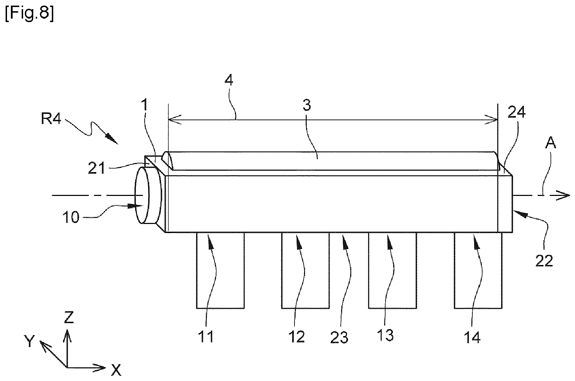

A la figure 8, un exemple de répartiteur d'admission d'air R4 selon l'invention est donné dans le cadre de l'amélioration des performances du répartiteur d'admission d'air R1 de la figure 1 de l'art antérieur. Les différences entre les répartiteurs d'admission d'air R1 et R2 de l'art antérieur de retrouvent de manière analogue entre les répartiteurs d'admission d'air R4 et R3 selon l'invention.

Le répartiteur d'admission d'air R4 diffère du répartiteur d'admission d'air R3 en ce qu'il comporte quatre orifices de sortie 11, 12, 13, 14 et en ce qu'il comporte un plenum 1 en forme de parallélépipède rectangle droit et dont toutes les faces sont planes.

Selon l'invention, la paroi latérale supérieure 24 du plenum 1 du répartiteur d'admission d'air R4 comporte une portion incurvée 3 convexe. La portion incurvée 3 est formée en saillie le long d'un tronçon 4 axial du plenum 1 qui s'étend pratiquement sur toute la longueur du plenum 1.

Dans l'exemple du répartiteur d'admission d'air R4, la portion incurvée 3 forme une portion cylindrique obtenue par l'intersection de la paroi latérale supérieure 24 et d'un cylindre creux fermé à ses extrémités, d'axe longitudinal et ayant la même longueur que le tronçon 4.

Le tronçon 4 est à proximité de la paroi transversale amont 21. Dans l'exemple du répartiteur d'admission d'air R4, l'extrémité amont du tronçon 4 est situé entre la paroi transversale amont 21 et l'orifice de sortie 11 le plus en amont.

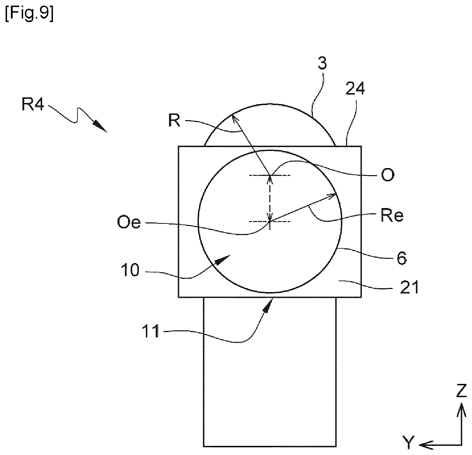

La figure 9 représente le répartiteur d'admission d'air R4 et donne des exemples de dimensionnement de la portion incurvée 3 à titre illustratif et nullement limitatif.

Dans l'exemple, l'orifice d'entrée 10 du répartiteur d'admission d'air R4 est circulaire de rayon Re. L'orifice d'entrée 10 du répartiteur d'admission d'air R4 est centré par rapport à la paroi transversale amont 21, c'est-à-dire que l'orifice d'entrée 10 comporte un centre Oe situé sur l'axe A du plenum 1. La paroi transversale amont 21 présente une hauteur selon l'axe Z inférieure à sa largeur selon l'axe Y.

La portion incurvée 3 présente une section transversale en arc de cercle de centre O.

La section transversale en arc de cercle de la portion incurvée 3 présente un rayon R constant tout le long du tronçon 4.

Selon l'invention, le rayon R de la section transversale en arc de cercle de la portion incurvée 3 est inférieur à la moitié de la largeur minimale du tronçon axial du plenum 1. Dans l'exemple, le rayon R est inférieur à la moitié de la largeur de la paroi transversale amont 21.

Le centre O de la section en forme d'arc de cercle de la portion incurvée 3 peut être excentré par rapport au centre Oe de l'orifice d'entrée 10. Dans l'exemple, le centre O de la section en forme d'arc de cercle de la portion incurvée 3 présente une excentricité E verticale et en direction de la paroi latérale supérieure 24 par rapport au centre Oe de l'orifice d'entrée 10.

Le centre O de la section en forme d'arc de cercle de la portion incurvée 3 est situé à l'intérieur du plenum 1. L'excentricité E est inférieure à la moitié de la hauteur de la paroi transversale amont 21.

## Revendications

1. Répartiteur d'admission d'air (R3, R4) pour un moteur à combustion, notamment pour véhicule automobile, comportant :
- un plenum (1) de forme parallélépipédique rectangle dont la longueur s'étend selon un axe A entre une paroi transversale amont (21) ouverte et une paroi transversale aval (22) fermée et qui présente une section transversale rectangulaire le long de l'axe A,
- un orifice d'entrée (10) de flux formé dans la paroi transversale amont (21) qui est arrondi et qui est apte à être relié à un conduit d'entrée d'un flux d'admission dans le plenum (1),
- au moins trois orifices de sortie (11, 12, 13, 14) d'un flux d'admission dont chacun est apte à être relié à un cylindre du moteur, et dont chacun est agencé dans une même paroi latérale inférieure (23) du plenum (1), le plenum (1) comportant
une paroi latérale supérieure (24) opposée à ladite paroi latérale inférieure (23) comportant une portion incurvée (3) convexe formée en saillie le long d'au moins un tronçon (4) axial du plenum, à proximité de la paroi transversale amont (21), et la portion incurvée (3) convexe présentant
une section transversale en arc de cercle de rayon (R), le rayon (R) étant inférieur à la moitié de la largeur minimale du tronçon axial du plenum (1).

2. Répartiteur d'admission d'air selon la revendication 1, **caractérisé en ce que** la portion incurvée (3) est dans le prolongement d'une partie supérieure (60) d'un bord (6) de l'orifice d'entrée (10).

3. Répartiteur d'admission d'air (R3, R4) selon l'une quelconque des revendications précédentes, **caractérisé en ce que** le rayon (R) de la section transversale en arc de cercle de la portion incurvée (3) est constant tout le long dudit tronçon (4).

4. Répartiteur d'admission d'air (R4) selon l'une quelconque des revendications précédentes, **caractérisé en ce que** le centre (O) de la section en forme d'arc de cercle de la portion incurvée (3) est excentré par rapport au centre (Oe) de l'orifice d'entrée (10).

5. Répartiteur d'admission d'air (R3, R4) selon l'une quelconque des revendications précédentes, **caractérisé en ce que** l'orifice d'entrée (10) est centré par rapport à la paroi transversale amont (21).

6. Répartiteur d'admission d'air (R3) selon l'une quelconque des revendications précédentes, **caractérisé en ce que** le plenum (1) présente une section décroissante sur une première portion (7) dudit tronçon (4) adjacente à la paroi transversale amont (21).

7. Répartiteur d'admission d'air (R3) selon la revendication 6, **caractérisé en ce que** le plenum (1) présente une section croissante sur une deuxième portion (8) dudit tronçon (4) adjacente à la première portion (7).

8. Répartiteur d'admission d'air (R3) selon l'une quelconque des revendications précédentes, **caractérisé en ce que** le tronçon s'étend en regard des deux orifices de sortie (11, 12) les plus en amont du plenum (1).

## Patentansprüche

1. Luftansaugverteiler (R3, R4) für einen Verbrennungsmotor, insbesondere für ein Kraftfahrzeug, umfassend:
- ein Plenum (1) mit parallelepipedischer rechteckiger Form, dessen Länge sich gemäß einer Achse A zwischen einer offenen stromaufwärtigen Querwand (21) und einer geschlossenen stromabwärtigen Querwand (22) erstreckt und das entlang der Achse A einen rechteckigen Querschnitt aufweist,
- eine Stromeintrittsöffnung (10), die in der stromaufwärtigen Querwand (21) gebildet ist und rund ist und dazu fähig ist, mit einer Eintrittsleitung für einen Ansaugstrom in das Plenum (1) verbunden zu sein,
- mindestens drei Austrittsöffnungen (11, 12, 13, 14) für einen Ansaugstrom, von denen jede dazu fähig ist, mit einem Zylinder des Motors verbunden zu sein, und von denen jede in einer gleichen unteren Seitenwand (23) des Plenums (1) angeordnet ist,
wobei das Plenum (1) eine obere Seitenwand (24) umfasst, die zu der unteren Seitenwand (23) entgegengesetzt ist und einen konvexen gekrümmten Abschnitt (3), der entlang mindestens eines axialen Teilabschnitts (4) des Plenums vorspringend ausgebildet ist, in der Nähe der stromaufwärtigen Querwand (21) umfasst, und wobei der konvexe gekrümmte Abschnitt (3) einen Querschnitt in Form eines Kreisbogens mit einem Radius (R) aufweist, wobei der Radius (R) kleiner als die Hälfte der minimalen Breite des axialen Teilabschnitts des Plenums (1) ist.

2. Luftansaugverteiler nach Anspruch 1, **dadurch gekennzeichnet, dass** sich der gekrümmte Abschnitt (3) in der Verlängerung eines oberen Teils (60) eines Rands (6) der Eintrittsöffnung (10) befindet.

3. Luftansaugverteiler (R3, R4) nach einem beliebigen der vorhergehenden Ansprüche, **dadurch gekennzeichnet, dass** der Radius (R) des kreisbogenförmigen Querschnitts des gekrümmten Abschnitts (3) über den gesamten Teilabschnitt (4) hinweg konstant ist.

4. Luftansaugverteiler (R4) nach einem beliebigen der vorhergehenden Ansprüche, **dadurch gekennzeichnet, dass** die Mitte (O) des kreisbogenförmigen Querschnitts des gekrümmten Abschnitts (3) in Bezug auf die Mitte (Oe) der Eintrittsöffnung (10) außermittig ist.

5. Luftansaugverteiler (R3, R4) nach einem beliebigen der vorhergehenden Ansprüche, **dadurch gekennzeichnet, dass** die Eintrittsöffnung (10) in Bezug auf die stromaufwärtige Querwand (21) zentriert ist.

6. Luftansaugverteiler (R3) nach einem beliebigen der vorhergehenden Ansprüche, **dadurch gekennzeichnet, dass** das Plenum (1) über einen ersten Abschnitt (7) des Teilabschnitts (4), der an die stromaufwärtige Querwand (21) angrenzt, einen abnehmenden Querschnitt aufweist.

7. Luftansaugverteiler (R3) nach Anspruch 6, **dadurch gekennzeichnet, dass** das Plenum (1) über einen zweiten Abschnitt (8) des Teilabschnitts (4), der an den ersten Abschnitt (7) angrenzt, einen zunehmenden Querschnitt aufweist.

8. Luftansaugverteiler (R3) nach einem beliebigen der vorhergehenden Ansprüche, **dadurch gekennzeichnet, dass** sich der Teilabschnitt gegenüber den zwei sich am weitesten stromaufwärts befindlichen Austrittsöffnungen (11, 12) des Plenums (1) erstreckt.

## Claims

1. Air intake manifold (R3, R4) for a combustion engine, in particular for a motor vehicle, comprising:
- a rectangular parallelepiped-shaped plenum (1) whose length extends along an axis A between an open upstream transverse wall (21) and a closed downstream transverse wall (22) and which has a rectangular cross section along the axis A,
- a flow inlet orifice (10) formed in the upstream transverse wall (21) that is rounded and is able to be connected to an inlet duct for an intake flow into the plenum (1),
- at least three outlet orifices (11, 12, 13, 14) for an intake flow, each of which is able to be connected to a cylinder of the engine, and each of which is arranged in the same lower lateral wall (23) of the plenum (1), the plenum (1) comprising an upper lateral wall (24) opposite to said lower lateral wall (23) and comprising a convex curved portion (3) formed so as to project along at least one axial section (4) of the plenum, in the vicinity of the upstream transverse wall (21), and the convex curved portion (3) having a cross section in the form of an arc of a circle of radius (R), the radius (R) being less than half the minimum width of the axial section of the plenum (1).

2. Air intake manifold according to Claim 1, **characterized in that** the curved portion (3) is in the continuation of an upper part (60) of an edge (6) of the inlet orifice (10).

3. Air intake manifold (R3, R4) according to either one of the preceding claims, **characterized in that** the radius (R) of the cross section in the form of an arc of a circle of the curved portion (3) is constant all along said section (4)

4. Air intake manifold (R4) according to any one of the preceding claims, **characterized in that** the centre (O) of the cross section in the form of an arc of a circle of the curved portion (3) is off-centre with respect to the centre (Oe) of the inlet orifice (10).

5. Air intake manifold (R3, R4) according to any one of the preceding claims, **characterized in that** the inlet orifice (10) is centred with respect to the upstream transverse wall (21).

6. Air intake manifold (R3) according to any one of the preceding claims, **characterized in that** the plenum (1) has a cross section which decreases over a first portion (7) of said section (4) adjacent to the upstream transverse wall (21).

7. Air intake manifold (R3) according to Claim 6, **characterized in that** the plenum (1) has a cross section which increases over a second portion (8) of said section (4) adjacent to the first portion (7).

8. Air intake manifold (R3) according to any one of the preceding claims, **characterized in that** the section extends facing the two outlet orifices (11, 12) of the plenum (1) that are furthest upstream.
